# EUROPÄISCHE PATENTANMELDUNG

(11) **EP 2 731 361 A1**
(43) Veröffentlichungstag der Anmeldung: **14.05.2014**
(21) Anmeldenummer: 13183696.7
(22) Anmeldetag: 10.09.2013
(51) Int. Cl.: H04W 4/00, H04L 12/28

(54) **Mobilgerät zum Konfigurieren eines anderen Gerätes, Verfahren zum Konfigurieren eines anderen Gerätes und entsprechende Anordnung mit mindestens einer Nahbereich-Kommunikationsverbindung**

(30) Priorität: 07.11.2012 DE 102012220268
(71) Anmelder: ROBERT BOSCH GMBH, 70442 Stuttgart (DE)
(72) Erfinder: Knoll, Stefan, 74321 Bietigheim-Bissingen (DE); Rogalla, Oliver, 71665 Vaihingen (DE); Duplys, Paulius, 71706 Markgroeningen (DE); Martin, Christopher, 70191 Stuttgart (DE)

(57) **Zusammenfassung**

Die Erfindung betrifft ein Mobilgerät (10) zum Konfigurieren eines anderen Gerätes (20) mit: einer Speichereinrichtung (11), welche dazu ausgelegt ist, mindestens einen Konfigurationsparameter des anderen Gerätes (20) zu speichern; einer Rechnereinrichtung (12), welche mit der Speichereinrichtung (11) gekoppelt ist und dazu ausgelegt ist, eine Kommunikationsverbindung (15) aufzubauen; und einer Schnittstelleneinrichtung (13), welche mit der Rechnereinrichtung (12) gekoppelt ist und dazu ausgelegt ist, den mindestens einen gespeicherten Konfigurationsparameter des anderen Gerätes (20) über die aufgebaute Kommunikationsverbindung (15) zu versenden und mit dem versendeten mindestens einen Konfigurationsparameter das andere Gerät (20) zu konfigurieren.

## Beschreibung

Die Erfindung betrifft ein Mobilgerät zum Konfigurieren eines anderen Gerätes, ein Verfahren zum Konfigurieren eines anderen Gerätes und eine entsprechende Anordnung mit mindestens einer Nahbereich-Kommunikationsverbindung.

### Stand der Technik

Die Druckschrift US 2009 170 432 A1 beschreibt eine Dienstbereitstellung unter Verwendung von Nahfeldkommunikation.

Bei der dort beschriebenen Dienstbereitstellung werden ein nicht-transitorischen computerlesbares Medium und eine Mehrzahl von Programmieranweisungen auf dem computerlesbaren Medium verwendet. Die Mehrzahl von Programmieranweisungen wird durch einen Prozessor eines Gerätes ausgeführt.

Eine mit dem Prozessor gekoppelte Vorrichtung erlaubt eine aktive Steuerung eines Hochfrequenz-Generators, um eine Nahfeldkommunikation zu erzeugen. Ferner werden durch eine Nahfeld-Kommunikationsvorrichtung, Bereitstellungsdaten des Gerätes empfangen und eine Koppelung des Gerätes mit den Bereitstellungsdaten vorgenommen.

Nahfeldkommunikation ist ein internationaler Übertragungsstandard zum kontaktlosen Austausch von Daten über kurze Strecken von bis zu 4 cm und ist als Kommunikationsprotokoll etabliert.

Bisher kommt diese Technik vor allem in Lösungen für Micropayment, das heißt der bargeldlosen Zahlungen kleiner Beträge, zum Einsatz. Somit beziehen sich die Anwendungsgebiete im Wesentlichen auf den Zahlungsverkehr.

### Offenbarung der Erfindung

Die vorliegende Erfindung schafft ein Mobilgerät zum Konfigurieren eines anderen Gerätes gemäß Patentanspruch 1.

Gemäß einem weiteren Aspekt schafft die vorliegende Erfindung ein Verfahren zum Konfigurieren eines anderen Gerätes mit den Merkmalen des Patentanspruchs 8.

Ferner schafft die vorliegende Erfindung eine Anordnung mit mindestens einer Nahbereich-Kommunikationsverbindung mit den Merkmalen des Patentanspruchs 11.

Die Erfindung beruht auf der Idee, bei einem NFC-Kommunkationssystem, auf Englisch "Near Field Communication", zu Deutsch mit "Nahbereich-Kommunikation" übersetzt, Abkürzung NFC, die in mobilen Geräten verfügbaren Kommunikationsparameter, wie etwa eine Netzwerkkonfiguration oder einen kryptographischen Schlüssel, mit einer einfachen Berührung direkt auf das Zielgerät zu übertragen.

### Vorteile der Erfindung

Ein Vorteil der Erfindung liegt darin, dass die NFC-Kommunikation eines ersten mobilen Mobilgerätes zum sicheren Konfigurieren eines zweiten Gerätes verwendet werden kann.

Vorteilhafte Ausführungsformen und Weiterbildungen ergeben sich aus den Unteransprüchen sowie aus der Beschreibung unter Bezugnahme auf die Figuren.

Gemäß einer Ausführungsform der Erfindung ist vorgesehen, dass die Kommunikationsverbindung als eine Nahbereich-Kommunikationsverbindung ausgebildet ist. Dies erlaubt vorteilhaft den einfachen Austausch verschiedener Daten, wie zum Beispiel digitaler Berechtigungen zwischen zwei kurzzeitig ohne besondere Anmeldung gepaarten Mobilgeräten, die nahe aneinandergehalten werden, und ohne dass es Fehler bei der wechselweisen Zuordnung der gepaarten Mobilgeräten gibt.

Gemäß einer Ausführungsform der Erfindung ist vorgesehen, dass die Schnittstelleneinrichtung des Mobilgerätes als ein elektromagnetische Wellen versendendes und/oder empfangendes Funketikett ausgebildet ist. Dies erlaubt eine einfache und sichere Funkübertragung der Konfigurationsparameter des zweiten Gerätes. Gemäß einer Ausführungsform der Erfindung ist vorgesehen, dass als der mindestens eine Konfigurationsparameter des anderen Gerätes eine Netzwerkkonfiguration des anderen Gerätes und/oder ein Schlüssel des anderen Gerätes zum Authentifizieren des anderen Gerätes vorgesehen ist. Dadurch kann auf eine sichere Weise die Netzwerkkonfiguration des anderen Gerätes übermittelt werden. Ebenso kann dadurch vorteilhaft das andere Gerät konfiguriert werden, ohne dass das andere Gerät eine entsprechende Schnittstellenrichtung oder sonstigen Mittel zur Kommunikation aufweist.

Gemäß einer Ausführungsform der Erfindung ist vorgesehen, dass die Schnittstelleneinrichtung ferner dazu ausgelegt ist, den gespeicherten mindestens einen Konfigurationsparameter des anderen Gerätes über die Kommunikationsverbindung an ein Festgerät zu versenden.

Gemäß einer Ausführungsform der Erfindung ist vorgesehen, dass die Speichereinrichtung als ein elektronischer Speicherbaustein ausgebildet ist. Dadurch können in der Speichereinrichtung eine oder eine Mehrzahl von Netzwerkkonfigurationen des anderen Gerätes oder einen oder eine Mehrzahl von Schlüsseln des anderen Gerätes abgespeichert werden und auf einfache Weise wieder gelöscht werden.

Gemäß einer Ausführungsform der Erfindung ist vorgesehen, dass die Rechnereinrichtung dazu ausgelegt ist, die Kommunikationsverbindung als eine bidirektionale Rechner-Rechner-Verbindung aufzubauen. Dies erlaubt eine schnelle und sichere Kommunikation zwischen dem Mobilgerät und dem Festgerät.

Gemäß einer Ausführungsform der Erfindung ist vorgesehen, dass das zweite Gerät als ein elektrischer Verbraucher eines Hausstromnetzes oder als eine schaltbare Steckdose ausgebildet ist. Dadurch können auch mit nur wenigen Hardware- und/oder Netzwerkkomponenten ausgestattete Mobilgeräte konfiguriert werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung einer Anordnung mit einem ersten Mobilgerät zum Konfigurieren eines anderen, zweiten Gerätes gemäß einer Ausführungsform der Erfindung;
- Fig. 2: eine schematische Darstellung einer Anordnung mit einem ersten Mobilgerät zum Konfigurieren eines anderen, zweiten Gerätes gemäß einer weiteren Ausführungsform der Erfindung;
- Fig. 3: eine schematische Darstellung einer Anordnung mit einem ersten Mobilgerät zum Konfigurieren eines anderen, zweiten Gerätes gemäß einer noch weiteren Ausführungsform der Erfindung; und
- Fig. 4: eine schematische Darstellung eines Flussdiagramms eines Verfahrens zum Konfigurieren eines anderen Gerätes gemäß noch einer weiteren Ausführungsform der Erfindung.

In den Figuren der Zeichnung bezeichnen gleiche Bezugszeichen gleiche oder funktionsgleiche Elemente, Bauteile, Komponenten oder Verfahrensschritte, soweit nichts Gegenteiliges angegeben ist.

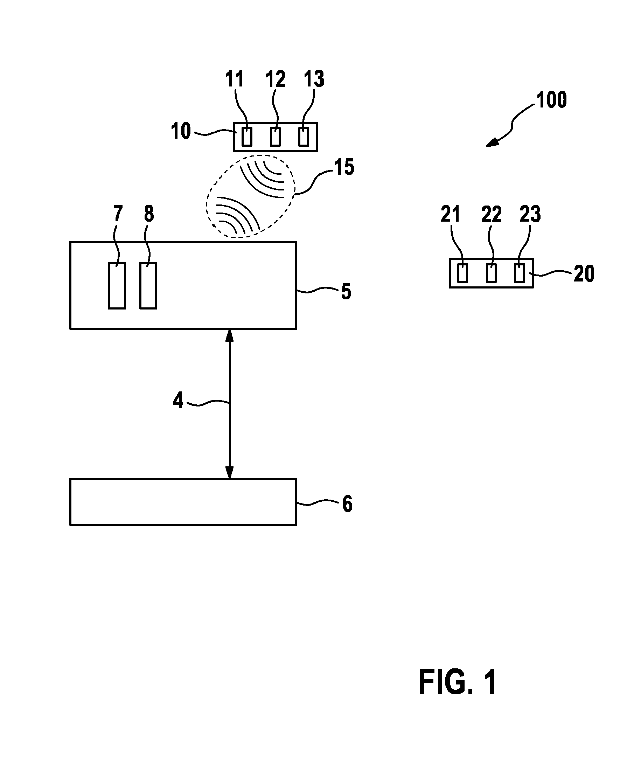

Die Figur 1 zeigt eine schematische Darstellung einer Anordnung mit einem Mobilgerät zum Konfigurieren eines anderen Gerätes gemäß einer Ausführungsform der Erfindung

Mobilgeräte im Sinne dieser Erfindung sind mobile Endgeräte, die aufgrund ihrer Größe und ihres Gewichts ohne größere körperliche Anstrengung tragbar und somit mobil einsetzbar sind. Mobilgeräte sind im Sinne dieser Erfindung in ihrer informationstechnischen und kommunikationstechnischen Definition zu verstehen.

Im Sinne dieser Erfindung werden unter Mobilgeräten Mobiltelefone, Smartphones oder Handys und Personal Digital Assistants, kurz PDA, zusammengefasst. Solche Mobilgeräte zeichnen sich durch die ortsunabhängige Verfügbarkeit von Daten und auf stationären Endgeräten nutzbaren Anwendungen sowie die gleichzeitige Nutzungsmöglichkeit von Funk-, Mobilfunk- und anderen Telekommunikationsdiensten aus.

Notebooks und Subnotebooks können im weiteren Sinne ebenfalls der Gruppe der Mobilgeräte zugeordnet werden, und werden dann unter dem Begriff Mobil Computing zusammengefasst.

Außerdem umfasst der Begriff Mobilegeräte Walk- und Discmans, MP3-Player, Taschenfernseher oder tragbare Fernsehgeräte, E-Book-Lesegeräte und andere tragbare Ausgabegeräte für elektronische Medien.

Zu den Mobilgeräten im Sinne dieser Erfindung zählen außerdem GPS-Geräte und andere tragbare Schnittstellengeräte der Satellitenkommunikation.

Eine Anordnung 100 mit einem ersten Mobilgerät 10 zum Konfigurieren eines anderen, zweiten Gerätes 20 umfasst das erste Mobilgerät 10 und das andere, zweite Gerät 20. Ferner umfasst die Anordnung 100 beispielsweise ein stationäres Festgerät 5 und eine Backendnetzwerk 6.

Das erste Mobilgerät 10 ist zum Konfigurieren des anderen, zweiten Gerätes 20 vorgesehen und umfasst eine Speichereinrichtung 11, eine Rechnereinrichtung 12 und eine Schnittstelleneinrichtung 13.

Die Speichereinrichtung 11 des ersten Mobilgerätes 10 kann dazu ausgelegt sein, mindestens einen Konfigurationsparameter des anderen, zweiten Gerätes 20 zu speichern.

Die Rechnereinrichtung 12 des ersten Mobilgerätes 10 ist beispielsweise mit der Speichereinrichtung 11 gekoppelt und beispielsweise dazu ausgelegt, eine Kommunikationsverbindung 15 zwischen dem ersten Mobilgerät 10 und einem stationären Festgerät 5 aufzubauen.

Die Schnittstelleneinrichtung 13 des ersten Mobilgerätes 10 kann dazu ausgelegt sein, den mindestens einen gespeicherten Konfigurationsparameter des anderen Gerätes 20 über die aufgebaute Kommunikationsverbindung 15 zu versenden und mit dem versendeten mindestens einen Konfigurationsparameter das andere Gerät 20 zu konfigurieren.

Die Schnittstelleneinrichtung 13 des ersten Mobilgerätes 10 kann Mittel zum Aufbau einer drahtgebundenen oder drahtlosen Verbindung aufweisen, beispielsweise ein Funkmodul für Bluetooth oder WLAN, eine Infrarotschnittstelle, ein RFID-Transponder oder dergleichen.

Das erste Mobilgerät 10 kann ferner Bedien- und Anzeigeelemente aufweisen.

Die Rechnereinrichtung 12 des ersten Mobilgerätes 10 kann eine Protokollsoftware oder einen Protokollchipsatz aufweisen, der dazu ausgelegt ist, notwendige Protokolle für die Kommunikation mit dem stationären Festgerät 5 und/oder dem anderen, zweiten Gerät 20 bereitzustellen.

Die Kommunikationsverbindung 15 kann als eine Nahbereich-Kommunikationsverbindung oder als eine sonstige Kommunikationsverbindung mit einem Übertragungsstandard zum kontaktlosen Austausch von Daten über kurze Strecken von bis zu 30 cm oder von bis zu 10 cm oder von bis zu 4 cm ausgebildet sein.

Die Schnittstelleneinrichtung 13 des ersten Mobilgerätes 10 kann als ein elektromagnetische Wellen versendendes und/oder empfangendes Funketikett ausgebildet sein.

Beispielsweise kann ein Funketikett, kurz RFID, für den englischen Begriff "radiofrequency identification", ins Deutsche übersetzt mit "Identifizierung mit Hilfe elektromagnetischer Wellen", eine automatische Identifizierung und Lokalisierung des ersten Mobilgerätes 10 ermöglichen und damit erheblich die Erfassung von über die Kommunikationsverbindung 15 übertragenden Daten des Mobilgerätes 10 erleichtern.

Das erste Mobilgerätes 10 und das stationären Festgerät 5 bilden beispielsweise ein Nahbereich-Kommunikationssystem.

Als der mindestens eine Konfigurationsparameter des anderen, zweiten Gerätes 20 kann eine Netzwerkkonfiguration des anderen, zweiten Gerätes 20 oder ein Schlüssel des anderen Gerätes 20 zum Authentifizieren des anderen, zweiten Gerätes 20 vorgesehen sein.

Beispielsweise kann die Netzwerkkonfiguration des anderen, zweiten Gerätes 20 Daten zu einer Netzwerkkonfiguration für eine Verbindung des anderen, zweiten Gerätes 20 mit einem Backendnetzwerk 6, welches mit dem stationären Festgerät 5 gekoppelt ist, umfassen.

Das stationäre Festgerät 5 kann als Terminal eines Nahbereich-Kommunikationssystems ausgebildet sein, etwa in der Form eines Fahrkartenautomaten oder in der Form eines Bezahlautomaten oder in der Form einer sonstigen stationären Einrichtung. Das stationäre Festgerät 5 kann ferner über eine Netzwerkverbindung 4 mit einem Backendnetzwerk 6 gekoppelt sein.

Ferner kann das stationäre Festgerät 5 als ein passiver RFID-Transponder ausgebildet sein und das erste Mobilgerät 10 aus den Funksignalen mit elektrischer Energie versorgen. Mit einer Spule als Empfangsantenne wird durch Induktion ähnlich wie in einem Transformator ein Kondensator oder ein sonstiger Energiespeicher des ersten Mobilgerätes 10 aufgeladen.

Das stationäre Festgerät 5 kann zur Kommunikation mit dem ersten Mobilgerät 10 und/oder dem anderen, zweiten Gerät 20 eine Rechnereinrichtung 7 und eine Schnittstelleneinrichtung 8 zur Datenkommunikation aufweisen.

Das Backendnetzwerk 6 ist beispielsweise als ein Datennetzwerk ausgebildet und kann ferner eine Mehrzahl von stationären Festgeräten und/oder Mobilgeräten umfassen. Das Backendnetzwerk 6 kann ferner als ein Peer-to-Peer oder als ein sonstiges Rechner-Rechner-Netz ausgebildet sein und zur Querkommunikation zwischen der Mehrzahl von stationären Festgeräten und/oder Mobilgeräten dienen.

Die Rechnereinrichtung 12 des ersten Mobilgerätes 10, die Schnittstelleneinrichtung 13 des ersten Mobilgerätes 10 und die Speichereinrichtung 11 des ersten Mobilgerätes 10 sind beispielsweise als netzwerkmäßig verbundene Rechnereinheiten ausgeführt.

Die Rechnereinrichtung 12 des ersten Mobilgerätes 10 und die Schnittstelleneinrichtung 13 des ersten Mobilgerätes 10 sind beispielsweise als eine Prozessoreinheit oder als eine sonstige elektronische Datenverarbeitungseinheit ausgebildet.

Das zweite Gerät 20 kann entsprechend dem ersten Mobilgerät 10 eine Speichereinrichtung 21, eine Rechnereinrichtung 22 und eine Schnittstelleneinrichtung 23 umfassen, welche jeweils entsprechend beschriebene Funktionen und Merkmale der Speichereinrichtung 11 des ersten Mobilgerätes 10, der Rechnereinrichtung 12 des ersten Mobilgerätes 10 und der Schnittstelleneinrichtung 13 des ersten Mobilgerätes 10 aufweisen.

Das zweite Gerät 20 kann als ein Mobilgerät oder als ein stationäres Gerät ausgebildet sein, wobei das zweite Gerät 20 eine Nahfeldkommunkationsverbindung aufbauen und benutzen kann.

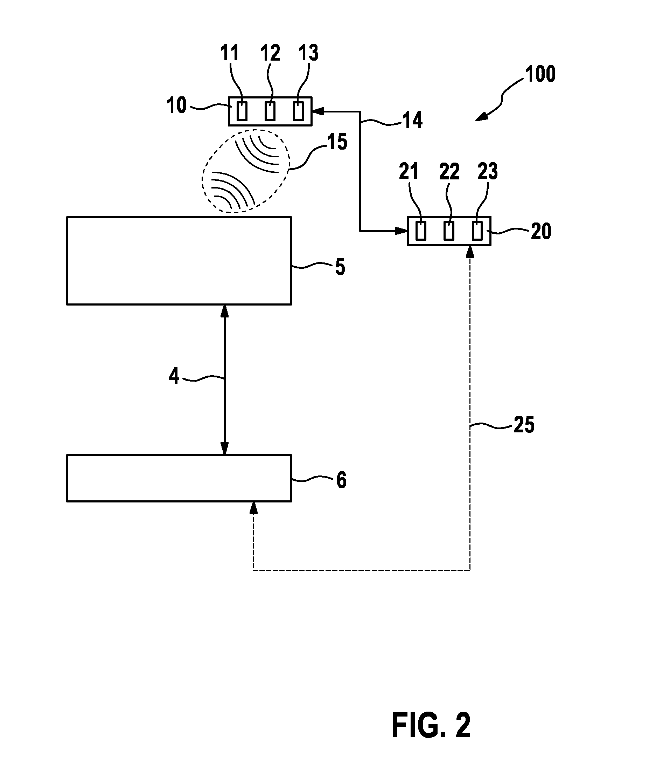

Die Figur 2 zeigt eine schematische Darstellung einer Anordnung mit einem ersten Mobilgerät zum Konfigurieren eines anderen, zweiten Gerätes gemäß einer noch weiteren Ausführungsform der Erfindung.

Abweichend von der in der Figur 1 gezeigten Ausführungsform der Anordnung 100 mit einem ersten Mobilgerät 10 zum Konfigurieren eines anderen, zweiten Gerätes 20 weist bei der in der Figur 2 gezeigten Ausführungsform das andere, zweite Gerät 20 eine Netzwerkverbindung 14 mit dem ersten Mobilgerät 10 auf.

Ferner ist zwischen dem anderen, zweiten Gerät 20 und dem Festgerät 5 ebenfalls eine Netzwerkverbindung 25 ausgebildet. Dadurch kann das andere, zweite Gerät 20 ohne in der unmittelbaren Umgebung des stationären Festgerätes 5 befindlich zu sein, eine Nahfeldkommunkationsverbindung nutzen, um Authentifizierungsvorgänge oder sonstige Netzwerkvorgänge abzuarbeiten.

Die weiteren in der Figur 2 gezeigten Bezugszeichen sind bereits in der zu der Figur 1 zugehörigen Figurenbeschreibung erläutert und werden daher nicht weiter beschrieben.

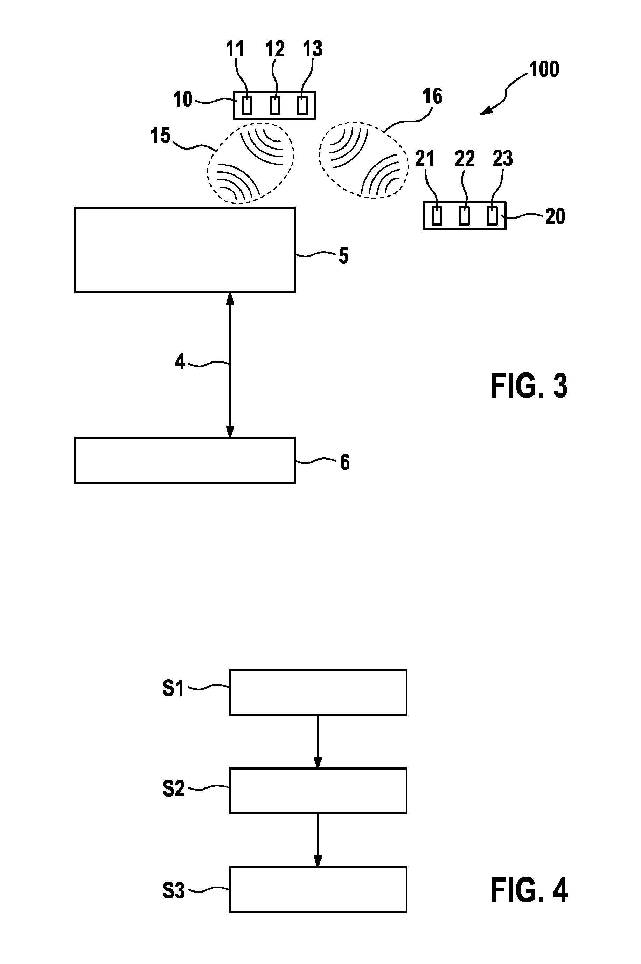

Die Figur 3 zeigt eine schematische Darstellung einer Anordnung mit einem Mobilgerät zum Konfigurieren eines anderen Gerätes gemäß einer noch weiteren Ausführungsform der Erfindung.

Abweichend von den in den Figuren 1 und 2 gezeigten Ausführungsform der Anordnung 100 mit einem ersten Mobilgerät 10 zum Konfigurieren eines anderen, zweiten Gerätes 20 weist bei der in der Figur 3 gezeigten Ausführungsform das andere, zweite Gerät 20 eine Funknetzwerkverbindung 16 mit dem ersten Mobilgerät 10 auf.

Die weiteren in der Figur 3 gezeigten Bezugszeichen sind bereits in der zu der Figur 1 zugehörigen Figurenbeschreibung erläutert und werden daher nicht weiter beschrieben.

Die Figur 4 zeigt eine schematische Darstellung eines Flussdiagramms eines Verfahrens zum Konfigurieren eines anderen Gerätes gemäß noch einer weiteren Ausführungsform der Erfindung.

Als ein erster Verfahrensschritt erfolgt ein Speichern S1 mindestens eines Konfigurationsparameters des anderen, zweiten Gerätes 20. Der mindestens eine Konfigurationsparameters des anderen, zweiten Gerätes 20 kann beispielsweise eine Netzwerkkonfiguration des anderen Gerätes 20 oder einen Schlüssel des anderen Gerätes 20 zum Authentifizieren des anderen Gerätes 20 umfassen.

Als ein zweiter Verfahrensschritt erfolgt ein Aufbauen S2 einer Kommunikationsverbindung 15 des ersten Mobilgerätes 10.

Als ein dritter Verfahrensschritt erfolgt ein Versenden S3 des mindestens einen gespeicherten Konfigurationsparameters des anderen Gerätes 20 über die aufgebaute Kommunikationsverbindung 15 und ein Konfigurieren des anderen Gerätes 20 mit dem versendeten mindestens einen Konfigurationsparameter.

Das Verfahren zum Konfigurieren eines anderen Gerätes kann Teil einer Nahbereich-Kommunikation eines ersten Mobilgerätes mit einem stationären Festgerät 5 sein.

Das Verfahren zum Konfigurieren eines anderen Gerätes kann ferner für eine Übertragung von Informationen auf ein mobiles Endgerät oder für elektronische Bodenleitsysteme verwendet werden.

Die Nahbereich-Kommunikation erfolgt entweder verbindungslos oder verbindungsbehaftet. Die zu berücksichtigenden Sicherheitsfunktionen werden auch in die Hardware der Mobilgeräte und/oder des zweiten Geräts integriert.

Beispielsweise kann das Versenden S3 in einem Frequenzbereich von 1 bis 100 MHz, oder in einem Frequenzbereich von 5 bis 75 MHz oder in einem Frequenzbereich von 10 bis 15 MHz erfolgen.

Die einzelnen Verfahrensschritte des Verfahrens zum Überprüfen einer Umfeldsensoreinrichtung können dabei in beliebiger Weise, etwa iterativ oder rekursiv, wiederholt werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Mobilgerät (10) zum Konfigurieren eines anderen Gerätes (20) mit:
- einer Speichereinrichtung (11), welche dazu ausgelegt ist, mindestens einen Konfigurationsparameter des anderen Gerätes (20) zu speichern;
- einer Rechnereinrichtung (12), welche mit der Speichereinrichtung (11) gekoppelt ist und dazu ausgelegt ist, eine Kommunikationsverbindung (15) aufzubauen; und
- einer Schnittstelleneinrichtung (13), welche mit der Rechnereinrichtung (12) gekoppelt ist und dazu ausgelegt ist, den mindestens einen gespeicherten Konfigurationsparameter des anderen Gerätes (20) über die aufgebaute Kommunikationsverbindung (15) zu versenden und mit dem versendeten mindestens einen Konfigurationsparameter das andere Gerät (20) zu konfigurieren.

2. Mobilgerät (10) nach Anspruch 1, die Kommunikationsverbindung (15) als eine Nahbereich-Kommunikationsverbindung ausgebildet ist.

3. Mobilgerät (10) nach einem der Ansprüche 1 und 2, wobei die Schnittstelleneinrichtung (13) des Mobilgerätes (10) als ein elektromagnetische Wellen versendendes und/oder empfangendes Funketikett ausgebildet ist.

4. Mobilgerät (10) nach einem der vorhergehenden Ansprüche, wobei als der mindestens eine Konfigurationsparameter des anderen Gerätes (20) eine Netzwerkkonfiguration des anderen Gerätes (20) und/oder ein Schlüssel des anderen Gerätes (20) zum Authentifizieren des anderen Gerätes (20) vorgesehen ist.

5. Mobilgerät (10) nach einem der vorhergehenden Ansprüche, wobei die Schnittstelleneinrichtung (13) ferner dazu ausgelegt ist, den gespeicherten mindestens einen Konfigurationsparameter des anderen Gerätes (20) über die Kommunikationsverbindung (15) an ein Festgerät (5) zu versenden.

6. Mobilgerät (10) nach einem der vorhergehenden Ansprüche, wobei die Speichereinrichtung (11) als ein elektronischer Speicherbaustein ausgebildet ist.

7. Mobilgerät (10) nach einem der vorhergehenden Ansprüche, wobei die Rechnereinrichtung (12) dazu ausgelegt ist, die Kommunikationsverbindung (15) als eine bidirektionale Rechner-Rechner-Verbindung aufzubauen.

8. Verfahren zum Konfigurieren eines anderen Gerätes (20), wobei das Verfahren auf einem ersten Mobilgerät (10) durchgeführt wird, mit folgenden Verfahrensschritten:
- Speichern (S1) mindestens eines Konfigurationsparameters des anderen Gerätes (20);
- Aufbauen (S2) einer Kommunikationsverbindung (15) des ersten Mobilgerätes (10); und
- Versenden (S3) des mindestens einen gespeicherten Konfigurationsparameters des anderen Gerätes (20) über die aufgebaute Kommunikationsverbindung (15) und Konfigurieren des anderen Gerätes (20) mit dem versendeten mindestens einen Konfigurationsparameter.

9. Verfahren nach Anspruch 8, wobei die Kommunikationsverbindung (15) als eine Nahbereich-Kommunikationsverbindung aufgebaut wird.

10. Verfahren nach einem der Ansprüche 8 und 9, wobei als der mindestens eine Konfigurationsparameter des anderen Gerätes (20) eine Netzwerkkonfiguration des anderen Gerätes (20) und/oder ein Schlüssel des anderen Gerätes (20) zum Authentifizieren des anderen Gerätes (20) verwendet wird.

11. Anordnung mit mindestens einer Nahbereich-Kommunikationsverbindung (15), wobei die Anordnung mindestens ein erstes Mobilgerät (10) nach einem der vorhergehenden Ansprüche 1 bis 7 und ein zweites Gerät (20) aufweist.

12. Anordnung nach Anspruch 11, wobei das zweite Gerät (20) als ein elektrischer Verbraucher eines Hausstromnetzes ausgebildet ist.

13. Anordnung nach Anspruch 11, wobei das zweite Gerät (20) als eine schaltbare Steckdose eines Hausstromnetzes ausgebildet ist.
